(19) Europäisches Patentamt / European Patent Office / Office européen des brevets

(11) **EP 4 183 467 A1**

(12) **EUROPEAN PATENT APPLICATION**

(43) Date of publication:
**24.05.2023 Bulletin 2023/21**

(21) Application number: **21209955.0**

(22) Date of filing: **23.11.2021**

(51) International Patent Classification (IPC):
**B01D 46/00** (2022.01)    **A47L 9/16** (2006.01)
**A47L 9/28** (2006.01)    **B01D 46/44** (2006.01)
**B01D 46/46** (2006.01)

(52) Cooperative Patent Classification (CPC):
**B01D 46/0086; A47L 9/16; A47L 9/2831;
B01D 46/444; B01D 46/46**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Philips Domestic Appliances Holding
B.V.
5656 AG Eindhoven (NL)**

(72) Inventors:
• **VAN DER KOOI, Johannes Tseard
5656 AE Eindhoven (NL)**
• **BOONSTRA, Bonne Lambert
5656 AE Eindhoven (NL)**

(74) Representative: **Vollering, Stefanus Franciscus
Maria
Philips Domestic Appliances IP Department
High Tech Campus 42
5656 AE Eindhoven (NL)**

(54) **FILTER CLEANING OF AN AIR TREATMENT DEVICE**

(57)    A system is provided for indicating when a filter of an air treatment device should be cleaned. A drive parameter of the air treatment device is monitored which correlates with a flow rate through the air treatment device, and a parameter level is derived which corresponds to a maximum flow rate which arises during a period of use of the air treatment device. A need for filter cleaning is determined based on the change in the parameter level over time.

FIG. 5

**Description**

FIELD OF THE INVENTION

This invention relates to air treatment devices which include a filter which has to be periodically changed or cleaned. For example it relates to vacuum cleaners.

BACKGROUND OF THE INVENTION

Most vacuum cleaners contain filters to purify the air by removing solid particles from the air flow through the vacuum cleaner. This functionality causes the filters to become polluted. The air flow resistance of a filter will increase when the filter becomes more polluted. As a result, the energy dissipation through the filter will increase and a reduced amount of energy is available for the cleaning function. Thus, the performance of the vacuum cleaner is better when the filter is clean.

Many vacuum cleaner designs require the user to perform maintenance on the filters (because the lifetime of the vacuum cleaner is longer than the lifetime of the filters). The filters must typically be cleaned or replaced on a regular basis to ensure that the vacuum cleaner maintains its suction power.

Users for example generally decide to perform filter maintenance when they notice that the cleaning performance of the vacuum cleaner is dropping. However, many users do not appreciate that they must perform filter maintenance at all, and therefore they tend to replace the vacuum cleaner when they notice a significant decrease in suction power, when in fact only filter cleaning is required.

With conventional dust bag vacuum cleaners, it may be acceptable to replace the entire appliance, since it may take years for the filters to become clogged. However, this does not apply to bag-less vacuum cleaners. In a bag-less vacuum cleaner, the separation of the dust from the air flow is implemented using a cyclonic separator instead of a dust bag. The separation performance of a cyclone is not as good as a conventional dust bag, with the result that the filters in bag-less vacuum cleaners often become clogged much faster. Therefore, a noticeable reduction in suction power typically already happens within a much shorter period, for example within the warranty period. There is also more chance of cyclone malfunction than dust bag malfunction, due to overloading.

With the current trend towards battery-operated stick vacuum cleaners which have less power available, the performance decrease has a greater and earlier impact.

If the user does not realize that this reduction in suction power is caused by a clogged filter, or continues to use the vacuum cleaner until there is a malfunction. the user may make a service or repair request under the warranty, which could have been avoided.

It is known to monitor the air flow conditions through a filter in order to detect filter clogging, so that an alert can be given to a user when the filter needs maintenance. For example, it is known to use a pressure switch to react to the pressure difference across the filter. However, at varying flow rates, the pressure difference does not relate directly to the level of filter pollution. Simply reacting to a pressure difference does not take account of different use cases, such as when changing a power setting or for different types of floor surface.

WO 2015/078672 discloses a method of monitoring the air filter pollution by monitoring air flow conditions associated with the fan that drives the air flow as well as monitoring the pressure difference across the filter. In particular, a pressure difference across the fan and a drive current of the motor that drives the fan are monitored. This enables a flow prediction to be made, and the combination of the flow prediction and the pressure drop across the filter enables a parameter to be derived related to the filter resistance, and thus the pollution.

However, this approach requires two pressure differences to be measured (one at the fan/motor and one at the filter), and hence four pressure monitoring points. Each pressure monitoring point and sensor adds cost and complexity making the vacuum cleaner less robust.

It would be desirable to be able to monitor filter resistance, and hence a level of filter clogging, with simplified sensing hardware.

SUMMARY OF THE INVENTION

The invention is defined by the claims.

According to examples in accordance with an aspect of the invention, there is provided a system for indicating when a filter of an air treatment device should be cleaned, comprising:

an arrangement for monitoring a drive parameter of the air treatment device which correlates with a flow rate through the air treatment device; and
a processor adapted to:

analyze the monitored drive parameter over time during use of the air treatment device;

based on the analysis, determine a parameter level which corresponds to a maximum flow rate during a period of use of the air treatment device; and

provide an output which indicates a need for filter cleaning based on the parameter level over time.

By monitoring a drive parameter, the need for additional sensors is avoided, such as pressure sensors. The drive parameter for example is a drive parameter of a system which drives an air flow through the air treatment device. This reduces the cost and complexity of the sensing function. The drive parameter varies with flow rate, so it provides a proxy measurement of flow rate. The maximum flow rate during a period of use may be the maximum flow rate during a set amount of time, or during one vacuum cleaning job. It is for example the maximum flow rate which has arisen during a preceding continuous period of use of the vacuum cleaner. This maximum flow rate is the flow rate when there is application of a minimum external flow resistance. Thus, by detecting the parameter level corresponding to this maximum flow rate, the operating condition of the air treatment device is found when there is minimal external flow resistance (e.g. when a vacuum cleaner head is not attached or is not in contact with a surface to be cleaned). A change in the parameter level over time may be monitored, or the parameter level may be compared with a threshold, or the number of crossings of a threshold over a period of time may be monitored.

The maximum flow rate is the maximum that can currently be achieved by the air treatment device, as a result of the current level of contamination of the filter.

A gradual reduction in this maximum flow rate over time (recognized by an increase or decrease in the monitored drive parameter depending on the relationship between them) is most likely caused by an increase in internal resistance (i.e. the filter) because the filter is the only element that changes resistance over time (or changes much more rapidly than the other components), and hence changes the maximum flow rate. A blockage will also influence the maximum flow rate, but this condition can be detected separately and hence does not prevent correct operation of the filter clean detection. A blockage will create a more rapidly decreasing maximum flow rate.

The trend in the maximum flow rate can thereby be translated to a filter pollution status.

The invention is for example applied to a vacuum cleaner, in particular a bag-less vacuum cleaner, but it may be applied to any air flow device that contains a filter that requires maintenance on a regular basis.

The arrangement for monitoring a drive parameter for example comprises:

a rotation speed sensor for sensing the drive speed of an air treatment device motor; and

a memory storing a flow rate function relating the flow rate to the drive speed.

The rotation speed sensor is for example an existing part of the control loop of the air treatment device motor. For example, a brushless DC motor has rotation sensing as part of the feedback control of the motor back EMF

The maximum flow rate corresponds to a minimum drive speed (at a certain power setting). The minimum drive speed arises when there is lowest external resistance to the flow, e.g. when a vacuum cleaner head is not against the floor. Thus, during a period of use of a vacuum cleaner, there will be different levels of external resistance as the head is moved around different floor types and moved between different locations. By monitoring how this minimum drive speed varies over time (e.g. based on the slope as well as the absolute value), the level of filter clogging can be estimated, and one or more thresholds can be set.

There will typically be periods of maximum flow rate simply because of the normal way of using a vacuum cleaner. Thus, it can be assumed that at some time, the head will be lifted from the floor or disconnected from the appliance, for example to vacuum stairs or a table or chair, and hence the minimum flow resistance will be present. However, a user may also be made aware that during use of a vacuum cleaner, there should be a period with the head not against a surface, for the purposes of the filter clogging analysis.

The memory for example stores a set of flow rate functions, with one for each of a plurality of different power settings of the air treatment device. In this way, the monitoring is effective for different power settings.

The processor may be adapted to indicate a need for filter cleaning when the determined parameter level reaches or passes a threshold. This threshold thus corresponds to the maximum flow rate dropping below a flow rate threshold over the predetermined period of time.

The processor may for example be adapted to indicate a need for filter cleaning when the determined parameter level passes a threshold value during each of a sequence of air treatment device operations.

This avoids a false positive message. Once the filter is clogged, the maximum flow rate will have irreversibly dropped, so that it is possible to repeat the analysis so that a check can be made that the filter cleaning message is correct before it is provided to the user.

The processor may instead be adapted to indicate a need for filter cleaning when a rate of change of the determined parameter level passes a threshold. For example, a slope of the decrease in maximum flow rate over time may pass a threshold. The flow rate may not drop linearly, but may drop with progressively increasing gradient. Thus, the parameter used to indicate when filter cleaning is needed may be based on a static value of the maximum flow rate or based on dynamic properties of the maximum flow rate over time or a combination of both.

The invention also provides a bag-less vacuum cleaner comprising:

a motor;
a cyclonic dust separator;
a filter;
a filter full output indicator; and
the system defined above for controlling the filter full indicator.

The vacuum cleaner for example comprises a stick vacuum cleaner.

The invention also provides a method for indicating when a filter of an air treatment device should be cleaned, comprising:

receiving a monitored drive parameter of the air treatment device which correlates with a flow rate through the air treatment device;
analyzing the monitored drive parameter over time during use of the air treatment device;
based on the analysis, determining a parameter level which corresponds to a maximum flow rate during a period of use of the air treatment device; and
providing an output which indicates a need for filter cleaning based on the parameter level over time.

Receiving a monitored drive parameter for example comprises receiving a drive speed of the air treatment device motor, and the method comprises applying the drive speed to a flow rate function relating the flow rate to the drive speed. The drive speed may be applied to a selected one of a set of flow rate functions depending on a power setting of the air treatment device.

The method may comprise providing an output indicating a need for filter cleaning when the determined parameter level reaches or passes a threshold and/or when a rate of change of the determined parameter level passes a threshold.

The method is for example for controlling a filter full indicator of a bag-less vacuum cleaner.

The invention also provides a computer program comprising computer program code which is adapted, when said program is run on a computer, to implement the method defined above.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Figure 1 shows a known cyclonic vacuum cleaner;.
Figure 2 shows the components in the flow path through the vacuum cleaner;
Figure 3 shows experimental results of a vacuum cleaner aggregate at three different power settings, showing the rotational speed versus the flow rate;
Figure 4 shows the pressure at the nozzle as a function of flow rate;
Figure 5 shows a system for indicating when a filter of a vacuum cleaner, or an air treatment device more generally, should be cleaned;
Figure 6 shows schematically the rotor position of the fan motor (as a measured sensor voltage) against time;
Figure 7 shows an H-bridge circuit which functions as an inverter to generate an alternating voltage to the stator coil of the motor from a DC supply;
Figure 8 shows exemplary experimental data plotting the rotational speed of the aggregate versus time;
Figure 9 shows the effect on the change of flow rate over time; and
Figure 10 shows a method for indicating when a filter of an air treatment device should be cleaned.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a system for indicating when a filter of an air treatment device should be cleaned. A drive parameter of the air treatment device is monitored which correlates with a flow rate through the air treatment device, and a parameter level is derived which corresponds to a maximum flow rate which arises during a period of use of the air treatment device. A need for filter cleaning is determined based on the change in the parameter level over time.

The invention may be applied to various different air treatment devices, but it is of particular interest for vacuum cleaners, in particular bag-less vacuum cleaners.

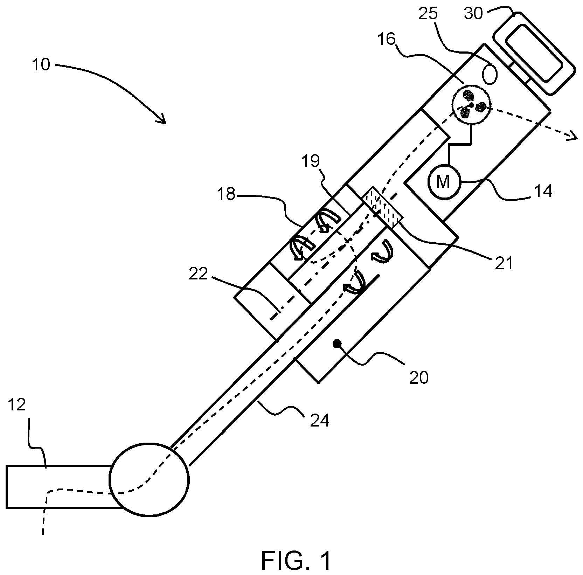

Figure 1 shows a known bag-less cyclonic vacuum cleaner 10, comprising a vacuum cleaner head 12, and a motor 14 and a fan 16 for delivering suction to the vacuum cleaner head. The assembly of the fan and motor is known as the aggregate.

A cyclone unit 18 is provided for separating particles from a flow generated by the suction of the aggregate. The cyclone unit has a vortex finder 19 around which a helical flow is generated, and this flow occupies an annular space around the vortex finder.

The cyclone unit 18 is in this example part of a dry dirt management system, which may include additional filters. The dirt management system has a collection chamber 20 for collecting the separated dirt. This may be an internal part of the cyclone unit or there may be a separate collection reservoir to which the cyclone unit connects. An outlet filter 21 is provided between the outlet flow of the cyclone unit and the aggregate as shown.

The cyclone unit has a cyclone axis of rotation 22 extending through the vortex finder. This axis 22 may be aligned parallel with the general length axis of the vacuum cleaner (as in the case in Figure 1), but it may equally be transverse to the length axis.

The vacuum cleaner head 12 is connected to the cyclone unit 18 by a delivery duct 24. This defines the direction in which air is delivered to the cyclone unit, in particular to the annular space surrounding the vortex finder.

Figure 1 also shows a filter full output indicator 25 for indicating to the user that filter 21 needs to be cleaned or replaced. There is a handle 30 at the opposite end to the head 12.

The vacuum cleaner shown is a battery-operated stick vacuum cleaner. In use, the head 12 forms the only contact with the surface to be vacuumed. Of course, the invention may be applied to a plug-in upright vacuum cleaner or a canister vacuum cleaner.

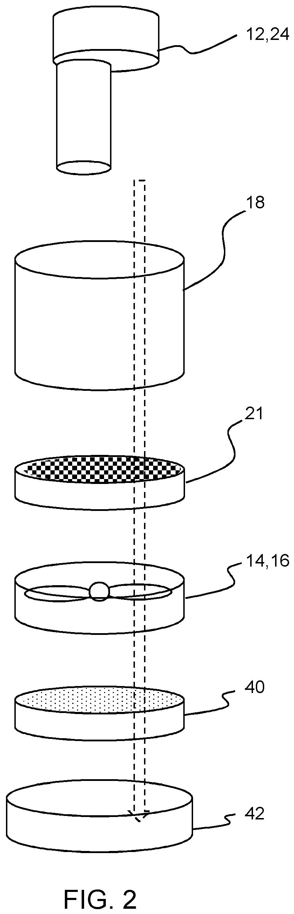

Figure 2 shows the components in the flow path through the vacuum cleaner. The components comprise the vacuum cleaner head and tube 12,24, the cyclone unit 18, the main filter 21 (which is the one to be maintained), and the aggregate 14,16. There is also a second filter 40 downstream of the aggregate 14,16 and a casing 42.

The second filter is for filtering particulates generated by the motor (e.g. carbon particles) or particles missed by the main filter, but the flow resistance remains relatively constant over time, compared to the change in filter resistance of the main filter 21. The approach of the invention is based in part on the assumption that the flow resistance of the other components are (more) constant over the maintenance time period of the main filter 21.

In general, the flow rate that is generated by the vacuum cleaner is determined by the electrical input power, the fan characteristic and the motor characteristic, and the total air flow resistance of the entire system.

During operation of the vacuum cleaner, the air flow resistance of the entire system (and hence the flow rate) may change during operation. Considering the entire flow system, it is possible to distinguish between two types of air flow resistances; internal air flow resistance, i.e. within the vacuum cleaner device and external air flow resistance, such as the resistance applied to the inlet of the vacuum cleaner.

A change in external air flow resistance is related to the vacuum cleaning appendage configuration (tube connection, tube length setting, connection or disconnection of a nozzle to the tube, nozzle type etc.) and its connection to the surface and the properties of the surface (hard floor, carpet, etc.). A change in internal air flow resistance is related to the pollution of the filter. Therefore, in order to determine a level of filter clogging, monitoring the internal resistance (only) is required.

To distinguish between internal and external air flow resistance, one approach is to provide pressure sensing across the filter, as has been proposed in the past.

When the aggregate is operating at a steady state condition, i.e. rotating at a constant rotational speed, a functional relationship exists between the electric input power, the rotational speed, and the flow rate. The existence of this relationship is demonstrated by the equation that describes the relation between the electric power provided to the motor and the suction power that is generated by the fan:

$$\text{Eq. 1} \qquad P_{el}(Q_{fan}, \omega) = \frac{\Delta p_{fan}(Q_{fan}, \omega) \cdot Q_{fan}}{\eta_{total}(Q_{fan}, \omega)}$$

To obtain an analytical relation for the flow rate as a function of the rotational speed and electric power, experiments can be conducted, or standard available motor and fan data can be used. This equation shows that the rotation speed correlates with a flow rate through the air treatment device. In addition, the correlation between these two parameters is different for different electrical powers, and hence different power settings of a vacuum cleaner.

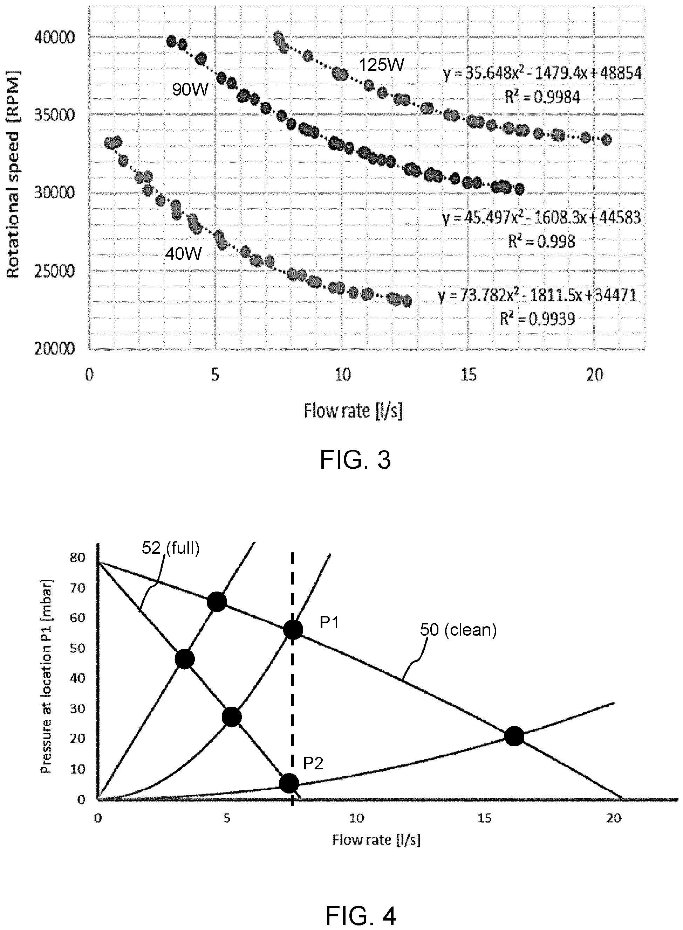

Figure 3 shows experimental results of a vacuum cleaner aggregate at three different power settings, showing the rotational speed versus the flow rate. The plots are for power settings of 40W, 90W and 125W.

In this case the relation between the rotational speed and flow rate can be fitted with a quadratic polynomial where the coefficients are functions of the power setting:

$$\text{Eq. 2} \qquad \omega(P_{el}, Q_{fan}) = a(P_{el}) \cdot Q_{fan}{}^2 + b(P_{el}) \cdot Q_{fan} + c(P_{el})$$

Solving for the flow rate gives the following analytical solution:

$$\text{Eq. 3} \qquad Q_{fan}(P_{el}, \omega) = A(P_{el}) + B(P_{el}) \cdot \sqrt{C(P_{el}) + D(P_{el}) \cdot \omega}$$

The coefficients of Eq. 3 can be computed from the coefficients of Eq. 2 using:

$$A(P_{el}) = -\frac{b(P_{el})}{2 \cdot a(P_{el})}$$

$$B(P_{el}) = -\frac{1}{2 \cdot a(P_{el})}$$

$$C(P_{el}) = b(P_{el})^2 - 4 \cdot a(P_{el}) \cdot c(P_{el})$$

$$D(P_{el}) = 4 \cdot a(P_{el})$$

The coefficients that correspond to the experimental data shown in Figure 3 are given in Table 1 below.

| | $P_{el}$ = 40W | $P_{el}$ = 90 W | $P_{el}$ = 125 W |
|---|---|---|---|
| $A(P_{el})$ | 12.28 | 17.67 | 20.75 |
| $B(P_{el})$ | -0,006777 | -0,01099 | -0.014026 |
| $C(P_{el})$ | -6892000 | -5527000 | -4778000 |
| $D(P_{el})$ | 295.1 | 182.0 | 142.6 |

These coefficients can be programmed into a microcontroller as a look up table, such that at each power setting $(P_{el})$ the flow rate (Q) can be computed by the microcontroller using a measured rotational speed $(\omega)$.

The rotational speed is one example of a possible drive parameter of the air treatment device, and which correlates with a flow rate through the air treatment device. For a constant rotational speed setting, the drive parameter may then comprise a power level or power setting. For a duty cycle controlled system, the drive parameter may comprise a duty cycle ratio.

When only information about the flow rate is provided, a smart solution is needed to distinguish between the internal and external air flow resistance.

The necessity of this is explained with reference to Figure 4 which shows the flow rate as a function of the pressure at the nozzle 12. As explained above, the variation in pressure is only a function of the fan drive conditions and the state of the main filter. Plot 50 is for a clean filter and plot 52 is for a clogged filter. The other curves are flow resistance curves and they show that with different flow use cases (e.g. with different attachments), there is a different relationship between flow rate and pressure.

Thus, additional information about the system is required in order to distinguish between a flow rate resulting from a dirty filter and a (same) flow rate resulting from a high resistance caused by the way the device is used by the user. For example, point P1 represents a clean filter and a high air flow resistance applied to the nozzle inlet in use, and point P2 represents a dirty (full) filter but a low air flow resistance applied to the nozzle inlet in use.

Comparing the performance characteristics of a 'clean' and a 'full' filter given in Figure 4, it can be observed that the maximum pressure point at zero flow does not change and the maximum flow rate point at zero pressure decreases with increasing filter pollution.

Since the maximum flow rate decreases with the increase of internal air flow resistance, this information can be used to obtain the pollution status of the filter by looking how the maximum flow rate decreases (or minimum rotational speed increases) over time. This is possible because for some of the time during vacuum cleaning, the operating point is close to the maximum flow point.

In particular, it can be assumed that during a vacuum cleaning job the nozzle is at least once free from the floor or disconnected from the handheld, and this automatically brings the external resistance to a constant minimum. The maximum flow rate measured at that time provides a very reliable value to predict filter pollution.

The flow rate is for example derived between 1 and 10 times per second. For each vacuuming session (or for each defined time period of use), a highest flowrate is stored in memory, or an average of a number (e.g. 5) of the highest flowrate values is derived and stored in memory.

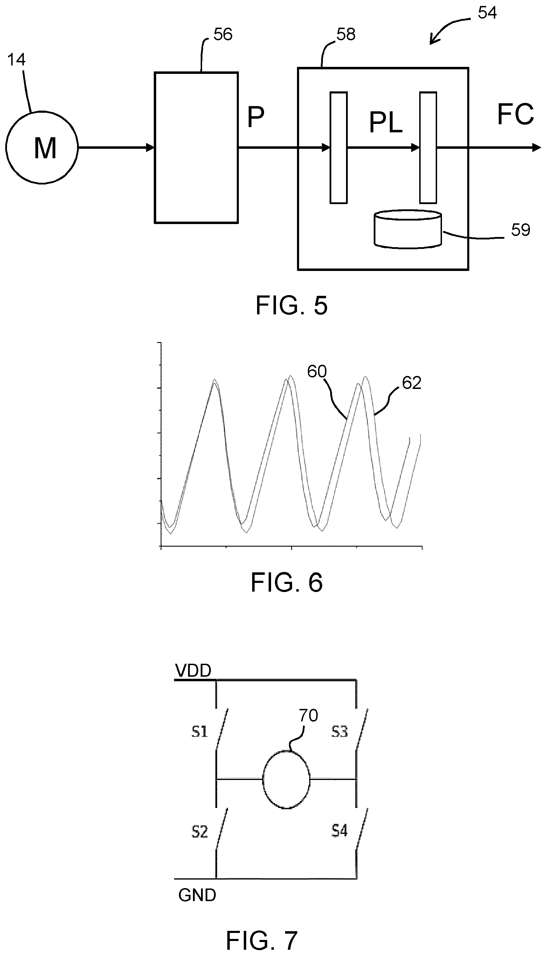

Figure 5 shows a system 54 for indicating when a filter of a vacuum cleaner, or an air treatment device more generally, should be cleaned based on the insights outlined above.

The system 54 comprises an arrangement 56 for monitoring a drive parameter "P" of the air treatment device which correlates with a flow rate through the air treatment device. The drive parameter in one example, as explained above, is the aggregate rotational speed.

A processor 58 analyzes the monitored drive parameter P over time during use of the air treatment device and based on the analysis, a parameter level PL is derived which corresponds to a maximum flow rate which has been achieved by the air treatment device during a period of use, as explained above. For this purpose, a memory 59 stores a flow rate function relating the flow rate to the drive parameter (e.g. fan drive speed). This flow rate function may be implemented as a look up table, or an algebraic function or data in any other suitable form.

The memory 59 for example stores a set of flow rate functions, with one for each of a plurality of different power settings of the air treatment device (i.e. the curves of Figure 3). In this way, the monitoring is effective for different power settings (i.e. different default motor drive speeds) for a device having multiple power settings. The invention may however also be applied to a device with only one power setting.

The parameter level PL is monitored over time and the evolution of the parameter level is used to provide an output "FC" which indicates a need for filter cleaning.

By monitoring a drive parameter, the need for additional sensors is avoided, such as pressure sensors. Indeed, the device may have no pressure sensors or direct flow sensors at all associated with the detection of the filter state. This reduces the cost of the sensing function as well increasing the reliability by reducing the number of components that may fail. The drive parameter varies with flow rate, so it provides a proxy measurement of flow rate.

The recorded maximum flow rate is the maximum flow rate (or an average of a set of maximum flow rates) measured during a preceding continuous period of use of the vacuum cleaner. This period of use may be one continuous period during which the vacuum cleaner is turned on, or it may be a time window of operation of the vacuum cleaner, such as 10 seconds or one minute or any other suitable time period e.g. between 5 seconds and 5 minutes.

By detecting the parameter level corresponding to this maximum flow rate, the operating condition of the air treatment device is found when there is a minimum external flow resistance (e.g. when a vacuum cleaner head is not attached or is not in contact with a surface to be cleaned). A gradual reduction in this maximum flow rate over time (recognized by an increase or decrease in the monitored drive parameter depending on the relationship between them) corresponds to an increase in filter resistance. The trend in the maximum flow rate is translated to a filter pollution status using the assumption that the filter is the only element that changes resistance over time (other than a quick blockage, which can be detected separately), and hence changes the maximum flow rate.

There are many different algorithms possible to determine the moment at which a filter full indicator should be triggered. One example is that the maximum flow rate (or minimum rotational speed) during each vacuum cleaning job (or during each monitoring time period) is logged in memory. When the maximum flow rate over a certain period of time is below a certain threshold value (or the rotational speed is above a certain threshold value) the filter full indicator is triggered. This certain period of time may be a variable time period corresponding to a predetermined number of vacuum cleaning jobs or it may be an actual time period (such as multiple days or weeks).

The trigger may require a succession of maximum flow rate values to be below a flow rate threshold or it may be based on an average maximum flow rate for a series of measurements, or it may be that the first measurement satisfying the conditions is sufficient to trigger the indicator.

Another option is to calculate the slope of the decrease in the maximum flow rate and predict a filter pollution trigger moment.

The measurement of the aggregate rotation speed typically does not need any additional sensors, beyond the existing motor hardware, in particular for a brushless DC motor.

Figure 6 shows schematically the rotor position of the fan motor (as a measured sensor voltage) against time.

The rotational speed may be measured from the frequency of the AC component (caused by the switching events in the motor) of the DC voltage to the fan. This AC component originates from the current variation that the fan draws, imposed on the impedance of the power supply.

Figure 6 shows the rotor position signal for two different loads; a low load 60 and high load 62. There is a frequency reduction when there is an increased load on the fan.

A fan using an electronically commutated brushless DC motor has internal sensors that measure the position of the rotor and switch the current through the coils in such a way that the rotor rotates. Thus, a rotation speed sensor is provided for sensing the drive speed of the air treatment device motor, but it is an integral part of the motor circuitry.

Figure 7 shows an H-bridge circuit which functions as an inverter to generate an alternating voltage to the stator coil 70 of the motor from a DC supply VDD, GND. The inverter has a set of switches S1 to S4 to generate an alternating voltage across the coil 70. The switches are controlled by signals which depend on the rotor position, and these rotor position signals may be used to monitor the fan rotation. Thus, the motor incorporates sensors which may be used to sense the rotation speed, hence the drive speed, of the air treatment device motor, without the need for any additional sensors.

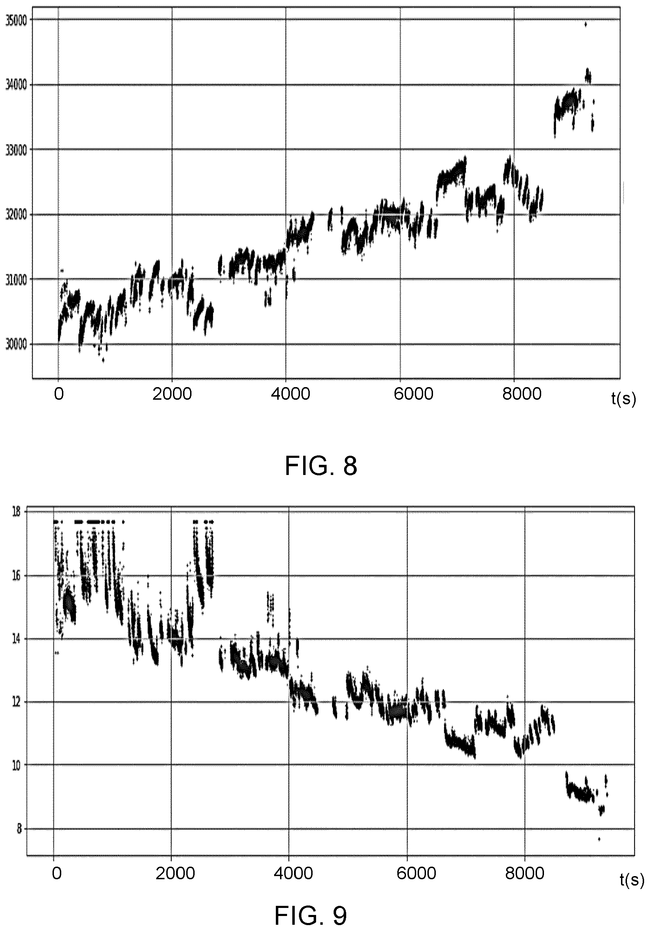

Figure 8 shows exemplary experimental data plotting the rotational speed of the aggregate versus time for a vacuum cleaner that has been operated at a constant power setting of 90 W. From this data it is clearly visible that the rotational speed increases over time as result of increasing filter pollution.

Figure 9 shows the effect on the change of flow rate over time (based on Eq. 3 above).

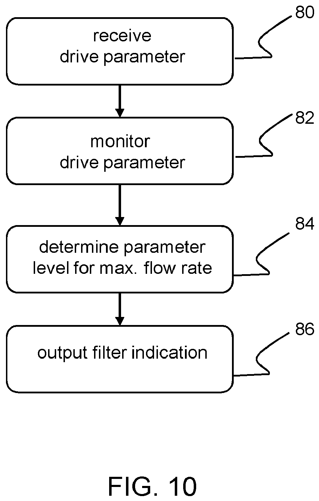

Figure 10 shows a method for indicating when a filter of an air treatment device should be cleaned, comprising:

in step 80, receiving a monitored a drive parameter of the air treatment device which correlates with a flow rate through the air treatment device;
in step 82, analyzing the monitored drive parameter over time during use of the air treatment device;
in step 84 based on the analysis, determining a parameter level which corresponds to a maximum flow rate achieved by the air treatment device during a period of use; and
in step 86, providing an output which indicates a need for filter cleaning based on the change in the parameter level over time.

One application of interest is for vacuum cleaners as is clear from the description above. The vacuum cleaner is any type which requires filter maintenance during the lifetime of the vacuum cleaner. This is commonly the case for bag-less vacuum cleaner using a cyclonic separator. However, it may be applied to other types of suction principle. The invention may be applied to a canister type, a stick type, an upright, or a robotic vacuum cleaner. It may also be applied to systems with sweeping functions. The invention may be applied to wet or dry vacuum cleaners.

As explained above, the invention provides an algorithm which detects when the main filter is dirty based on the assumption that the main filter becomes dirty more quickly than the other components of the vacuum cleaner, including the second filter 40. However, a change in flow resistance of either filter will have the same result on the detection algorithm. It may be advisable to clean both filters when the trigger is generated. An alternative could be that a first trigger is given for the main filter. When this is cleaned and the system still detects a too low maximum flow rate, a trigger for the second filter could be given under the assumption that the user cleaned the first one sufficiently.

The invention is also not limited to vacuum cleaners only. The working principle can also be applied to any other air flow device that contains a filter that requires maintenance on a regular basis. It is of particular interest to devices for which a variable flow restriction is present, and the invention in particular then enables internal flow resistances to be distinguished from external influences to the flow resistance. This may apply to kitchen extractor hoods, air purifiers, HVAC systems, respiratory devices, etc.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

The method of the invention may be implemented in software, to be run on a processor of the air treatment device. A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

**Claims**

1. A system (54) for indicating when a filter of an air treatment device should be cleaned, comprising:

   an arrangement (56) for monitoring a drive parameter (P) of the air treatment device which correlates with a flow rate through the air treatment device; and
   a processor (58) adapted to:

   analyze the monitored drive parameter over time during use of the air treatment device;
   based on the analysis, determine a parameter level which corresponds to a maximum flow rate during a period of use of the air treatment device; and
   provide an output which indicates a need for filter cleaning based on the parameter level over time.

2. The system of claim 1, wherein the arrangement (56) for monitoring a drive parameter comprises:

   a rotation speed sensor for sensing the drive speed of an air treatment device motor; and
   a memory (59) storing a flow rate function relating the flow rate to the drive speed.

3. The system of claim 2, wherein the memory (59) stores a set of flow rate functions, with one for each of a plurality of different power settings of the air treatment device.

4. The system of any one of claims 1 to 3, wherein the processor (58) is adapted to indicate a need for filter cleaning when the determined parameter level (PL) reaches or passes a threshold.

5. The system of claim 4, wherein the processor (58) is adapted to indicate a need for filter cleaning when the determined parameter level (PL) passes a threshold value during each of a sequence of air treatment device operations.

6. The system of any one of claims 1 to 3, wherein the processor (58) is adapted to indicate a need for filter cleaning when a rate of change of the determined parameter level (PL) passes a threshold.

7. A bag-less vacuum cleaner comprising:

   a motor (14);
   a cyclonic dust separator (18);
   a filter (21);
   a filter full output indicator (25); and
   the system of any one of claims 1 to 6 for controlling the filter full indicator.

8. The vacuum cleaner of claim 7 comprising a stick vacuum cleaner.

9. A method for indicating when a filter of an air treatment device should be cleaned, comprising:

   (80) receiving a monitored drive parameter of the air treatment device which correlates with a flow rate through the air treatment device;
   (82) analyzing the monitored drive parameter over time during use of the air treatment device;
   (84) based on the analysis, determining a parameter level which corresponds to a maximum flow rate during a period of use of the air treatment device; and
   (86) providing an output which indicates a need for filter cleaning based on the parameter level over time.

10. The method of claim 9, wherein receiving a monitored a drive parameter comprises receiving a drive speed of the air treatment device motor, and the method comprises applying the drive speed to a flow rate function relating the flow rate to the drive speed.

11. The system of claim 10, comprising applying the drive speed to a selected one of a set of flow rate functions depending on a power setting of the air treatment device.

12. The method of any one of claims 9 to 11, comprising providing an output indicating a need for filter cleaning when the determined parameter level reaches or passes a threshold.

13. The method of any one of claims 9 to 11, comprising providing an output indicating a need for filter cleaning when a rate of change of the determined parameter level passes a threshold.

14. The method of any one of claims 9 to 13 for controlling a filter full indicator of a bag-less vacuum cleaner.

15. A computer program comprising computer program code which is adapted, when said program is run on a computer, to implement the method of any one of claims 9 to 14.

FIG. 1

FIG. 2

FIG. 3

FIG. 4

14 — M

56

P

58

PL

54

FC

59

## FIG. 5

60    62

## FIG. 6

VDD

S1    70    S3

S2    S4

GND

## FIG. 7

FIG. 8

FIG. 9

receive
drive parameter — 80

monitor
drive parameter — 82

determine parameter
level for max. flow rate — 84

output filter indication — 86

FIG. 10

**EUROPEAN SEARCH REPORT**

Application Number

EP 21 20 9955

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 021 985 A (ZHUICHUANG TECH SUZHOU CO LTD) 4 December 2020 (2020-12-04) * claims 1-9 * | 1-15 | INV. B01D46/00 A47L9/16 A47L9/28 B01D46/44 B01D46/46 |
| A | US 4 958 406 A (TOYOSHIMA HISANORI [JP] ET AL) 25 September 1990 (1990-09-25) * claims 1-10 * | 1-10 | |
| A | CN 111 110 108 A (BEIJING ROBOROCK TECH CO LTD) 8 May 2020 (2020-05-08) * claims 1-10 * | 1-15 | |
| A | US 2006/100796 A1 (FRADEN JACOB [US] ET AL) 11 May 2006 (2006-05-11) * claims 1-12 * | 1-15 | |

TECHNICAL FIELDS SEARCHED (IPC)

B01D
A47L

The present search report has been drawn up for all claims

| Place of search | Date of completion of the search | Examiner |
|---|---|---|
| Munich | 12 April 2022 | Skowronski, Maik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 20 9955

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2022

| Patent document cited in search report | | Publication date | Patent family member(s) | | Publication date |
|---|---|---|---|---|---|
| CN 112021985 | A | 04-12-2020 | NONE | | |
| US 4958406 | A | 25-09-1990 | CN | 1034853 A | 23-08-1989 |
| | | | DE | 3853409 T2 | 27-07-1995 |
| | | | EP | 0320878 A2 | 21-06-1989 |
| | | | EP | 0601999 A1 | 15-06-1994 |
| | | | KR | 890009349 A | 01-08-1989 |
| | | | US | 4958406 A | 25-09-1990 |
| | | | US | RE34286 E | 22-06-1993 |
| CN 111110108 | A | 08-05-2020 | NONE | | |
| US 2006100796 | A1 | 11-05-2006 | NONE | | |

EPO FORM P0459

**REFERENCES CITED IN THE DESCRIPTION**

**Patent documents cited in the description**

- WO 2015078672 A